# EUROPEAN PATENT SPECIFICATION

(11) **EP 2 848 638 B1**
(45) Date of publication and mention of the grant of the patent: **08.04.2020**
(21) Application number: 13183991.2
(22) Date of filing: 11.09.2013
(51) Int. Cl.: C08G 18/76, C08G 18/10, C09J 5/02, C09J 175/04, C08L 71/02, B32B 21/00, B27N 3/00, B32B 7/12, B32B 21/13

(54) **Adhesive system for lignocellulosic substrates having high levels of extractives**
Haftsystem für lignocellulosehaltige Substrate mit hohem Anteil von Extraktstoffen
Système adhésif pour substrats lignocellulosiques présentant des niveaux élevés de matières extractives

(43) Date of publication of application: 18.03.2015
(73) Proprietor: Henkel AG & Co. KGaA, 40589 Düsseldorf (DE)
(72) Inventor: Amen-Chen, Carlos, 8102 Oberengstringen (CH); Gabriel, Joseph, 6018 Buttisholz (CH)

(56) References cited:
- WO-A1-2013/096535
- WO-A2-03/093385
- US-A- 4 618 390

## Description

### Field of the Invention

This application is directed to an adhesive system suitable for preparing lignocellulosic composites. More particularly, the application is directed to an adhesive system comprising a primer composition which is used to treat the surface of a lignocellulosic substrate prior to the application of a polyurethane adhesive composition thereto and wherein that substrate comprises a lignocellulosic material, such as larch, which has a high level of extractives.

### Background of the Invention

Wood extractives are substances present in a given wood, which are not an integral part of the cellular structure and which can be removed from that wood in solution following the treatment of the wood with either hot or cold water, or with other chemically inert solvents. The type and level of extractives in a given wood is an important variable in the strength and durability of adhesive bonded assemblies (Chapter 10 Wood Handbook, Wood as an Engineering Material, U.S. Department of Agriculture, FPL-GTR-190, 2010).

It is known that extractives can migrate to the wood surface and either cause inactivation of that surface or react with any adhesive disposed there. The consequences of surface inactivation due to extractive migration can be that the adhesive fails to wet the wood; the adhesive bonds to a thin layer of extractives at the wood surface; or, the extractives dissolve into the adhesive and either impact the curing kinetics or make that adhesive too viscous to adequately penetrate into the wood structure.

The present application is directed to those woods or lignocellulosic substrates which contain high levels of extractives and, in particular, of arabinogalactan. This polysaccharide - which includes galactose and arabinose units in varying ratios and which varies in molecular weight - is completely soluble in water over a wide temperature range and also at high concentrations, resulting in stable, low viscosity solutions. It is present in high levels in woods such as larch, hemlock, black spruce, Douglas fir, cedar, juniper, and sugar maple.

Of these woods, larch has found substantial commercial utility for outdoor applications - such as bridges, balconies and playgrounds - on account of its great strength and its high resistance to water, insect decay and pests. It is also commonly used for indoor applications, such as flooring and furniture, due to its good aesthetic appearance. That said, the high level of extractives and, in particular, arabinogalactan in larch has limited the use of this wood as a raw material in the pulp and paper industry (Bergstedt et al. Larch Wood - A Literature Review, Forest & Landscape Denmark, Univer-4, 1990, 263-272). In the case of larch bonding, it is considered that these extractives diminish the adhesion durability of different adhesive systems, including the polyurethane adhesive systems which are the subject of the present application.

The durability of polyurethane adhesives for wood structural purposes is closely regulated by, for instance, European Standards (EN), the American Society for Testing Materials (ASTM) and the Canadian Standards Association (CSA). In order to meet both regulatory and practical requirements, Custodio et al. in "A Review of Adhesion Promotion Techniques for Solid Timber Substrates", The Journal of Adhesion 84, 2008, pages 502-529 proposed a number of adhesion improvement techniques for wood elements; amongst these techniques the use of primers to treat the surface of the wood prior to the application of the polyurethane adhesive composition thereto has practical, safety and environmental advantages. Indeed, certain authors have used primers to address the problems of adhesion durability of polyurethane adhesives to wood substrates.

Kuenniger et al. in Chemical and Technological Effects of Arabinogalactan in Larch Bonding, Cost Action E34, SBF Nr. C05.0046, Eidgenoessiches Material Pruefungsamt (EMPA) Duebendorf, Schweiz (2006) found that the water washing of larch extractives is detrimental to the performance of one component (1K) polyurethane adhesives. This publication also evaluated the use of a hydroxymethylated resorcinol (HMR) for gluing larch, in accordance with the teaching of United States Patent No. 5,543,487 (Vick et al.). To form the HMR coupling agent, formaldehyde and resorcinol were reacted under mildly alkaline conditions in situ for between 4 and 6 hours at a temperature between 65° and 85°F before application to wood surfaces at the high spread rate of 150 g/m². Once applied, the primered wood was then stored for 4 hours before bonding. In toto the larch bonding process of Kuenniger et al. took of the order of days and would thus be too slow for economical application in a production plant. Moreover, the reactant formaldehyde is a known human carcinogen and its use would necessitate precautionary and expensive plant construction.

International Patent Application Publication No. WO2007/ 095670 (Commonwealth Scientific and Industrial Research Organisation) describes a waterborne primer composition for application to a substrate prior to inter alia polyurethane adhesives, which primer comprises a polyamine - preferably a polyethyleneimine - and has a pH of at least 11.5. In the enabled embodiments of this document, the hardwood specimens required a burdensome two-step sanding process - consisting of sequential coarse then fine sanding - before the application of this primer. Furthermore, whilst the dry tensile strength of the primer-containing samples was improved, this citation fails to report any results regarding wet adhesion strength, delamination or heat resistance as required by structural use standards, or any results specific to larch or like species.

There thus remains a need to develop a primer composition which, upon application to larch and like wood substrates, can be used to enhance the adhesion durability and ideally the adhesion strength of a polyurethane adhesive composition within an adhesive system which does not suffer the aforementioned disadvantages of the prior art.

### Statement of the Invention

In a first aspect of the present invention, there is provided an adhesive system for preparing lignocellulosic composites comprising:
a) a primer composition; and,
b) a polyurethane adhesive composition,
wherein said primer composition comprises:
i) from 1 to 100% by weight of the composition of at least one compound having a hydroxyl number of less than or equal to 30 mg KOH/g and being selected from the group consisting of polyalkylene glycols, polyalkylene glycol mono-ethers and polyalkylene glycol di-ethers; and,
ii) 0 to 99% by weight of the primer composition of solvent.

The primer composition may further comprise iii) up to 5% by weight of the primer composition of surfactant selected from the group consisting of water soluble surfactants, water emulsifiable surfactants and mixtures thereof, wherein said surfactant is not a compound i).

In a specific embodiment of this adhesive system, said primer composition comprises at least one polyalkylene glycol having a hydroxyl number of less than or equal to 30 mg KOH/g, having a weight average molecular weight (Mw) of from 5,000 to 20,000 daltons and being of the formula (I):

(I) HO-[CHR¹- (CR²R³)ₙO]ₘH

wherein: n is an integer of from 1 to 5, preferably 1 or 2; m is a positive integer; and, R¹, R² and R³ are independently selected from hydrogen, alkyl, aryl, aralkyl, alkylaryl and mixtures thereof.

In an alternative embodiment of this adhesive system, said primer composition comprises at least one glycol ether having a hydroxyl number of less than or equal to 30 mg KOH/g, having a weight average molecular weight (Mw) of from 90 to 20,000 daltons and being of the formula (II):

(II) R⁴O-[CHR⁵-(CHR⁶)ₓO]_{y}-R⁷

wherein: x is an integer from 1 to 5, preferably 1 or 2; y is a positive integer; R⁴, R⁵, R⁶ and R⁷ are independently selected from hydrogen, alkyl, aryl, aralkyl, alkylaryl and mixtures thereof; and, R⁴ and R⁷ are not both hydrogen.

And in a further, independent embodiment of the adhesive system, the polyurethane adhesive composition is a moisture-curable, one-component polyurethane adhesive composition. This one-component polyurethane adhesive composition should preferably comprise: at least one prepolymer having free NCO groups, said prepolymer being obtainable from at least one component A comprising a compound reactive toward isocyanates and at least one component B comprising an isocyanate; from 0 to 40% by weight, preferably from 0.1 to 30% by weight, of filler; from 0 to 20% by weight of customary additives and assistants; and, from 0 to 20% by weight of an activator.

It is noted that good results have been obtained in an adhesive system where the one-component polyurethane adhesive composition, to be applied after the primer composition, comprises at least one prepolymer having free NCO groups which is characterized by: i) an NCO content of from 5 to 30%, preferably from 10 to 25% by weight, based on the prepolymer; ii) a functionality of from 2.2 to 3, preferably from 2.4 to 2.9; and, iii) a viscosity at 20°C of from 300 to 35,000 mPa.s, preferably from 1000 to 10,000 mPa.s.

It is envisaged that the adhesive composition may contain more than one prepolymer. Whilst the second or further prepolymers need not meet the characterizing features i) to iii) above, it is preferred that the averaged properties of the prepolymers do meet these characterizations. Optimally, each included prepolymer should meet these characterizations.

In accordance with a second aspect of the invention, there is provided a process for preparing a lignocellulosic bonded article comprising the steps of:
(a) providing at least two lignocellulosic surfaces;
(b) providing an adhesive system as defined above;
(c) applying said adhesive system to at least a portion of at least one of the lignocellulosic surfaces; and
(d) contacting the at least one lignocellulosic surface with another lignocellulosic surface under conditions suitable for forming an adhesive bond there-between. At least one of the so-contacted lignocellulosic surfaces should comprise larch.

In a specific embodiment of this process, step c) thereof comprises applying the primer composition to at least a portion of at least one of the lignocellulosic surfaces; and, applying said polyurethane adhesive composition to said portion(s) of the lignocellulosic surface(s). The application of the adhesive to the primered portions of the lignocellulosic substrates may take place up to 15 minutes, for instance from 1 to 10 minutes, after the application of the primer, but equally longer waiting times may also be tolerated.

The application of the primer composition to the lignocellulosic surface serves to improve the adhesion strength and specifically the wet adhesion strength of the subsequently applied polyurethane adhesive composition. This enables the lignocellulosic article obtained by the above defined process to meet the standards set for structural wood products. In particular, the lignocellulosic articles can meet or surpass the wet use requirements of European Standard EN 391:2001, Canadian Standard Association (CSA) Standard 112.9 and / or American Society for Testing Materials (ASTM) D2259.

In a further aspect there is provided the use as a primer, in an adhesive system for lignocellulosic materials, of a composition comprising:
from 1 to 100% by weight of the composition of at least one compound having a hydroxyl number of less than or equal to 30 mg KOH/g and being selected from the group consisting of polyalkylene glycols, polyalkylene glycol mono-ethers and polyalkylene glycol di-ethers; and,
0 to 99% by weight of the composition of solvent.

The so-defined composition has particular utility as a primer in an adhesive system for lignocellulosic materials containing larch.

### Definitions

As used herein EN 391 refers to European Standard EN 391:2001 entitled "Glued laminated timber - Delamination test of glue lines".

As used herein CSA 112.9 refers to Canadian Standard Association (CSA) Standard 112.9 entitled "Standard Specification for Evaluation of Adhesives for Structural Wood Products (Exterior Exposure)".

As used herein ASTM D2559 refers to American Society for Testing Materials ASTM Standard D2559-04 entitled "Standard Specification for Adhesives for Structural Laminated Wood Products for Use Under Exterior (Wet Use) Exposure Conditions".

As used herein "an active hydrogen moiety" refers to a moiety containing a hydrogen atom which, because of its position in the molecule, displays significant activity according to the Zerewitnoff Test described by Wohler in Journal of the American Chemical Society, Vol. 49, p. 3181 (1927).

As used herein, the term "surfactant" means a compound that, when dissolved in a liquid, reduces the surface tension of the liquid, which reduces the interfacial tension between two liquids or which reduces surface tension between a liquid and a solid. More typically the term "surfactant" is used herein to refer to a compound that, when dissolved in water, reduces the surface tension of the water.

Unless otherwise stated, the term molecular weight as used herein for oligomeric, polymeric and copolymeric species refers to weight average molecular weight (Mw) as determined using gel permeation chromatography according to the protocol found in Colloids and Surfaces A. Physico Chemical & Engineering Aspects, Vol. 162, 2000, pg. 107-121.

The term "polyol" as used herein shall include compounds having 2, 3 or more hydroxyl groups.

The hydroxyl (OH) values given herein are measured according to Japan Industrial Standard (JIS) K-1557, 6.4.

The isocyanate content values given herein are measured according to EN ISO 11909.

Viscosities of the adhesive compositions and of prepolymers as described herein are determined according to the following procedure: measured using the Brookfield Viscometer, Model RVT at standard conditions of 20°C and 50% Relative Humidity (RH). The viscometer is calibrated using silicone oils of known viscosities, which vary from 5,000 cps to 50,000 cps. A set of RV spindles that attach to the viscometer are used for the calibration. Measurements of the prepolymer are done using the No. 6 spindle at a speed of 20 revolutions per minute for 1 minute until the viscometer equilibrates. The viscosity corresponding to the equilibrium reading is then calculated using the calibration.

As used herein, "anhydrous" means the relevant composition includes less than 0.25% by weight of water. For example the composition may contain less than 0.1% by weight of water or be completely free of water. The term "solvent-free" should be interpreted analogously as meaning the relevant composition comprises less than 0.25% by weight of solvent.

As used herein the term "lignocellulosic material" is intended to mean a woody material, including but not limited to: wooden boards; wood veneers; wood fibers; wood strips; wood flakes; wood particles, including wood particles that have been comminuted with agricultural wastes such as rice hulls, baggasse and straw; other wood based composites; and, combinations thereof.

### Detailed Description of the Invention

The invention will now be described with reference to a number of more detailed embodiments.

### Primer composition

The primer composition of the present invention comprises:
i) from 1 to 100% by weight of the composition of at least one compound having a hydroxyl number of less than or equal to 30 mg KOH/g and being selected from the group consisting of polyalkylene glycols, polyalkylene glycol mono-ethers and polyalkylene glycol di-ethers; and,
ii) 0 to 99% by weight of the composition of solvent.

The primer composition may further comprise iii) up to 5% by weight of the composition of surfactant selected from the group consisting of water soluble surfactants, water emulsifiable surfactants and mixtures thereof, wherein said surfactant is not a compound i).

The primer composition may be anhydrous or solvent-free, of which one embodiment is a primer composition which consists exclusively of the glycol based compound(s). More usually, the primer composition will comprise diluted solutions of the glycol based compounds, the solvent content of the composition being up to 99 wt.%, typically up to 95 wt.% and preferably from 50 to 85 wt.%.

The type of solvent is not particularly limited but it should operate to diminish the raising of the natural grain of the wood substrate to which the composition is applied. The selected solvent should also not react with any surfactant which may be present in the composition. Preferably the solvent is water or comprises a substantial amount of water e.g. at least 80% by weight of the solvent; such water can be tap water, de-ionized water, de-mineralized water or a mixture thereof. However, esters, ethers, alcohols, ketones, amides and the like may equally be suitable as solvents. Further, mixtures of solvents may be employed.

When an aqueous primer composition is employed it should have a pH whereby it does not cause acid wood damage nor does it discolor the wood, as is known with strongly alkaline compositions. In practice, such an aqueous primer composition should typically have a pH in the range from 6 to 8 and preferably from 6.5 to 7.5.

The diluted primer compositions are formulated by simple mixing of the various components. This mixing may occur well in advance of the application of the composition to the surface of the substrate: the diluted composition would thus be applied to the surface of the substrate as a prepared solution. In alternative embodiment, the diluted composition can be prepared within a rinse stream just prior to or during contact with the substrate surface. For example, a certain quantity of the glycol based compound together with surfactant, where applicable, can be injected into a continuous stream of water and, optionally, co-solvent to form an aqueous primer composition.

### Glycol Based Compound

In accordance with a first embodiment of the primer composition, said composition comprises at least one polyalkylene glycol having a hydroxyl number of less than or equal to 30 mg KOH/g, having a molecular weight of from 5,000 to 20,000 daltons and being of the formula (I):

(I) HO-[CHR¹-(CR²R³)ₙO]ₘH

wherein: n is an integer of from 1 to 5, preferably 1 or 2; m is a positive integer; and, R¹, R² and R³ are independently selected from hydrogen, alkyl, aryl, aralkyl, alkylaryl and mixtures thereof. Preferably R¹, R² and R³ are independently selected from the group consisting of hydrogen and C₁-C₁₀ alkyl or C₁-C₅ alkyl.

Where m>1, the integer n may be independently selected for each m unit. Moreover, where n>1 and / or m>1, R¹, R² and R³ may be the same or different for each repeating unit. The polyalkylene glycol may therefore consist of a repeating singular unit or include a plurality of different units which are either disposed in blocks or disposed randomly along the polymer chain.

In a preferred embodiment, R¹, R² and R³ in Formula (I) are all hydrogen. In particular, good results have been obtained where the primer composition comprises a polyalkylene glycol having a molecular weight of from 5,000 to 15,000 daltons and which is selected from the group consisting of polyethylene glycols, polypropylene glycols and polyethylene-polypropylene glycols.

Exemplary commercially available polyalkylene glycols include: Renex™ PEG 6000-FL (available from Croda International); SYNPERONIC™ PE/P 105 and SYNPERONIC™ PE/F 68 (available from Croda International); and, Pluronic™ PE 6800 and Pluronic™ PE 10500 (available from BASF).

In accordance with a second embodiment of the primer composition, said composition comprises at least one glycol ether having a hydroxyl number of less than or equal to 30 mg KOH/g, having a weight average molecular weight (Mw) of from 90 to 20,000 daltons and being of the formula (II):

(II) R⁴O-[CHR⁵-(CHR⁶)ₓO]_{y}-R⁷

wherein:
x is an integer from 1 to 5, preferably 1 or 2;
y is a positive integer, preferably of from 1 to 60, more preferably of from 2 to 30 and most preferably of 5 to 30;
R⁴, R⁵, R⁶ and R⁷ are independently selected from hydrogen, alkyl, aryl, aralkyl, alkylaryl and mixtures thereof; and,
R⁴ and R⁷ are not both hydrogen.

Preferably, R⁴, R⁵, R⁶ and R⁷ are independently selected from the group consisting of hydrogen and C₁-C₁₀ alkyl e.g. C₁ - C₅ alkyl, with the proviso that R⁴ and R⁷ may not both be hydrogen.

Where y>1, the integer x may be independently selected for each y unit. Moreover, where x>1 and / or y>1, R⁵ and R⁶ may be the same or different for each repeating unit. The polyalkylene glycol ether may therefore consist of a repeating singular unit or include a plurality of different units which are either disposed in blocks or disposed randomly along the polymer chain.

In a preferred embodiment, R⁵ and R⁶ in Formula (I) are both hydrogen. Alternatively or additionally, it is preferred that at least one of R⁴ and R⁷ is methyl.

Exemplary commercially available (poly-)glycol mono- or diethers include: Tetraglyme™^{,} a polytetraethylene glyol dimethyl ether available in pure form from Clariant Produkte (Deutschland) GmbH; and, Triglyme™ is a triethylene glycol dimethyl ether (M_{w} 178) available in pure form from Clariant Produkte (Deutschland) GmbH.

### Surfactant

The primer composition may optionally comprise iii) up to 5 wt.%, normally up to 1 wt.% and preferably from 0.01 to 0.1 wt.% of surfactant selected from the group consisting of water soluble surfactants, water emulsifiable surfactants and mixtures thereof.

The choice of such surfactants is not intended to be limited: for instance, the surfactant may or may not contain functional groups which are reactive to isocyanate moieties. They may have a number average molecular weight (Mn) of up 100,000 g/mol although more usually the surfactants will have a number average molecular weight (Mn) of from 400 to 25000 or to 5000, as determined by means of gel permeation chromatography against a polystyrene standard. Surfactants meeting criteria such as these can be found, for instance, in Surfactants and Interfacial Phenomena, Second Edition, M. J. Rosen, 1989, John Wiley and Sons, Inc., New York, pages 1-32.

For the sake of completeness, it is noted that certain polyalkylene glycols, polyalkylene glycol mono-ethers and polyalkylene glycol di-ethers having a hydroxyl number of less than or equal to 30 mg KOH/g may be classified as surfactants. As such, the term surfactant as it applies to the component iii) of the primer composition precludes such glycols or glycol ethers.

The preferred surfactants of the present invention are selected from the group consisting of: siloxane based surfactants; alkyl polyglucosides, including alkylpolysaccharides; alkoxylated fatty acids; alkoxylated alcohols; alkylsufosuccinates; acetylenic diols; and, mixtures thereof.

Suitable siloxane-based surfactants include silicon surfactants compatible with aqueous systems. Such surfactants include, but are not limited to, silicone polyoxyalkylene copolymers, organosilicone-polyether copolymer surfactants, and the like. In certain embodiments, preferred siloxane-based surfactants include BYK® surfactants available from BYK Chemie GmbH and Tego® surfactants available from Evonik Industries, of which BYK® 347 and 348 and Tego® Wet 280 and Wet 265 might be specifically noted. Other silicon surfactants can be identified for example in Hill (1999) Silicon Surfactants, Marcel Decker, New York.

As noted, the primer composition may contain one or more alkyl polyglucoside surfactants which may preferably have a naturally derived alkyl substituent, such as coconut fatty alcohol or a distilled cut of a natural fatty alcohol. Suitable alkyl polyglucoside surfactants, including alkylpolysaccharides, are disclosed in inter alia US Patent Nos.: 5,776,872 (Giret et al.); 5,883,059 (Furman et al.); 5,883,062 (Addison et al.); and, 4,565,647 (Llenado). And exemplary commercially available alkyl polyglucosides surfactants include: Triton® CG110 available from Dow Chemical Company; AG6202® available from Akzo Nobel; and, Alkadet 15® available from Huntsman Corporation.

Alkylsulfosuccinate surfactant compounds are well-known and include the salts of mono-esters of sulfosuccinic acid, the salts of di-esters of sulfosuccinic acid - each of which may, optionally, be alkoxylated - as well as mixtures thereof. Exemplary sulfosuccinate surfactant compounds include disodium monooctylsulfosuccinate, sodium dioctylsulfosuccinate, disodium lauryl sulfosuccinate, disodium laureth sulfosuccinate, disodium laurimide (MEA) sulfosuccinate, disodium mono-alkylphenyl ether sulfosuccinate, and mixtures thereof.

Alkoxylated fatty acid surfactants are also well-known in the art. Generally the fatty acid portion of such alkoxylated fatty acid surfactants is derived from a saturated or unsaturated mono- or di- fatty acids, typically a C₆-C₃₀ fatty acid such as lauric acid, myristic acid, palmitic acid, stearic acid, oleic acid, linoleic acid, behenic acid, erucic acid. Such acids may be derived from vegetable oils, such as, for example, tall oil, rapeseed oil, canola oil, soy oil, coconut oil, castor oil, corn oil, olive oil, sunflower oil, cottonseed oil, palm oil, peanut oil, sesame oil, safflower oil, linseed oil, flax seed oil, palm kernel oil, and mixtures thereof. These fatty acids are alkoxylated with from 2 to 20 moles, more typically from 5 to 20 moles of a C₂-C₄ alkylene oxide, more typically, ethylene oxide.

Appropriate alkoxylated alcohol surfactant compounds for use in the present invention include but are not limited to ethoxylated (15) tridecyl alcohol, ethoxylated (7) lauryl alcohol, ethoxylated (20) oleyl alcohol, ethoxylated (15) stearyl alcohol, and mixtures thereof.

Acetylenic diol-based surfactants are surfactants which can be acetylenic diols comprising hydrophobic groups at the end of the acetylenic spacer and hydrophilic and / or hydrophobic ethers hanging off of the hydroxyl groups. Examples of acetylenic diol-based surfactants include, 2,4,7,9-tetramethyl-5-decyne-4,7-diol (TMDD), 2,5,8,11-tetramethyl-6-dodecyne-5,8-diol, their derivatives, and their mixtures. And valued examples of commercial acetylenic diol-based surfactants include the Dynol series (e.g. Dynol 604) and Surfynol series available from Air Products & Chemicals.

In accordance with a preferred embodiment of the present invention, the surfactant of the primer composition is BYK 348 available from BYK Chemie GmbH.

### One-Component Polyurethane Composition

In a preferred embodiment of the adhesive system of the present invention, a one-component polyurethane adhesive composition comprising a prepolymer having free NCO groups is employed. More particularly, that one-component polyurethane adhesive composition should comprise:
a prepolymer having free NCO groups, said prepolymer being obtainable from at least one component A comprising a compound reactive toward isocyanates and at least one component B comprising an isocyanate;
from 0 to 40% by weight, preferably from 0.1 to 30% by weight, of filler;
from 0 to 20% by weight of customary additives and assistants; and,
from 0 to 20% by weight of an activator.

The prepolymers should have an average isocyanate functionality which is sufficient to allow the preparation of a crosslinked polyurethane upon cure but not so high that the polymers are unstable. Stability in this context means that either the prepolymer or the adhesive composition prepared from the prepolymer has a shelf life of at least 2 months at ambient temperatures, in that it does not demonstrate an increase in viscosity during such period which prevents its application or use. Preferably the prepolymer or adhesive composition prepared therefrom does not undergo an increase in viscosity of more than about 50 percent during the stated period.

Generally the average isocyanate functionality of the prepolymer is at least about 2.2 and preferably at least about 2.4; below about 2.2 the adhesives obtained upon crosslinking of the prepolymer tend to be too soft or elastic and in, some instances, the strength of the cured adhesive is compromised. Further, the average isocyanate functionality of the prepolymer is generally 3.0 or less, and more preferably 2.9 or less; above 3.0 average isocyanate functionality the prepolymer and adhesives prepared from the prepolymer may exhibit unacceptable stability.

The prepolymer may also be characterized by its NCO content which should be at a level which facilitates acceptable strength in adhesives prepared from the prepolymers after 60 minutes and stability of the prepolymer. The NCO isocyanate content should typically be in the range from 5 to 30% by weight of the prepolymer, preferably be from 10 to 25% by weight, and more preferably be from 15 to 25% by weight. Above 30% NCO content by weight the adhesives compositions prepared from the prepolymer may demonstrate lap shear strengths after 60 minutes which are too low for the intended use; some foaming during cure of the adhesive composition prepared from the prepolymer may also occur. At an NCO content below about 5% by weight isocyanate content, the prepolymer may exhibit instability, such as gelling within 1 to 3 days.

The prepolymer should exhibit a viscosity which facilitates the formulation of a stable, pumpable, non-gelling adhesive composition which has good green strength. In this regard, the viscosity of the prepolymer should generally be from 300 to 35,000 mPa.s, preferably be from 1,000 to 30,000 mPa.s, and more preferably be from 1,000 to 10,000 mPas. The viscosity of the adhesive composition can of course be adjusted with fillers but these cannot contribute to the green strength of the final adhesive.

Collectively, the prepolymer should preferably be characterized by: i) an NCO content of from 5 to 30%, preferably from 10 to 25% by weight, based on the prepolymer; ii) a functionality of from 2.2 to 3.0, preferably from 2.2 or 2.4 to 2.9; and, iii) a viscosity at 20°C of from 300 to 35,000 mPa.s, preferably from 1,000 to 10,000 mPa.s. These properties may be found by using known commercially available prepolymers. Alternatively, components A and B may be reacted in a ratio and under conditions such that these properties are achieved in the resultant prepolymer.

The polyisocyanates (B) used in preparing the prepolymer include any aliphatic, cycloaliphatic, arylaliphatic, heterocyclic or aromatic polyisocyanate, or mixture thereof, having an average isocyanate functionality of at least about 2.0 and an equivalent weight of at least about 80. The isocyanate functionality of the polyisocyanate will more generally be from about 2.2 to 4.0, for example 2.3 to 3.5. Whilst functionalities greater than 4.0 may be used, their use can cause excessive crosslinking, resulting in an adhesive composition which is too viscous to handle and apply easily; further, the cured adhesive may be too brittle and cause foaming due to carbon dioxide gassing. The equivalent weight of the polyisocyanate is typically from 50 to 300 g/eq, preferably from 110 to 250 g/eq, and more preferably from 120 to 200 g/eq.

The polyisocyanates, where required, may have been biuretized and / or isocyanurated by generally known methods, such as described in UK Patent No. 889,050.

Examples of suitable polyisocyanates include but are not limited to: ethylene diisocyanate; 1,4-tetramethylene diisocyanate; hexamethylene diisocyanate (HDI); biuret or trimers of HDI; 1,12-dodecane diisocyanate, cyclobutane-1,3-diisocyanate cyclohexane-1,3- and 1,4-diisocyanate and mixtures of these isomers; 1-isocyanato-3,3,5-trimethyl-5-isocyanato methyl cyclohexane; 2,4- and 2,6-hexahydrotolylene diisocyanate and mixtures of these isomers,; hexahydrol,3- and/or 1,4-phenylene diisocyanate; perhydro-2,5'- and/or 4,4'-diphenyl methane diisocyanate; 1,3- and 1,4-phenylene diisocyanate; 2,4- and 2,6-tolylene diisocyanate and mixtures of these isomers; diphenyl methane-2,4'- and/or 4,4'-diisocyanate (MDI); naphthylene-1,5-diisocyanate; triphenyl methane-4,4',4'-tri-isocyanate; and, polyphenyl polymethylene polyisocyanates of the type obtained by condensing aniline with formaldehyde, followed by phosgenation such as described in UK Patent Nos. 874,430 and 848,671.

Di- and / or polyisocyanates comprising ester, urea, allophanate, carbodiimide, uretdione and / or urethane groups may also be used in the process according to the invention.

In an embodiment, diphenyl methane diisocyanate (methylene diphenyl diisocynate, MDI), as polymeric or monomeric MDI, is used for the preparation of the pre-polymer. Preferably that MDI is in monomeric form, with either 4,4'-MDI or mixtures of 2,4'-MDI and 4,4'-MDI being particularly preferred.

The term isocyanate-reactive compound (A) as used herein includes water and any organic compound having, on average, more than one and preferably from 2 to 4 isocyanate-reactive moieties. These are generally compounds containing an active hydrogen moiety. Illustrative of active hydrogen moieties are - COOH, -OH, -NH₂, -NH-, -CONH₂, -SH, and -CONH and typical active hydrogen-containing compounds include polyols, polyamines, polymercaptans, polyacids and compounds containing at least one oxazolidine moiety.

The preferred isocyanate-reactive compounds for use in the present invention are polyols and in particular polyols having from 2 to 4 isocyanate-reactive hydroxyl moieties. The polyol may, for instance, be a mixture of one or more diols and one or more triols. And the polyols may include polyether polyols, polyester polyols, poly(alkylene carbonate)polyols, hydroxyl-containing polythioethers, polymer polyols, and mixtures thereof. The hydroxyl number of the polyhydroxy compounds is as a rule from 20 to 850 mg KOH/g and preferably from 25 to 500 mg KOH/g.

Whilst diols and triols of low molecular weights, for instance from 60 to 400 or 300, may be reactive towards isocyanates, these polyols are more typically used as starter molecules, chain extenders and / or crosslinking agents in a reaction mixture which contains one or more further active hydrogen compounds. In this regard, mention may be made: aliphatic, cycloaliphatic and/or araliphatic diols having from 2 to 14 and preferably from 4 to 10 carbon atoms, such as ethylene glycol, 1,3-propanediol, 1,4-butanediol, 1,6-hexanediol, 1,10-decanediol, o-, m- and p-dihydroxycyclohexane; diethylene glycol; dipropylene glycol; bis(2-hydroxyethyl)hydroquinone; and, triols, such as 1,2,4-, and 1,3,5-trihydroxycyclohexane, glycerol and trimethylolpropane.

Polyether polyols are well-known in the art and include polyoxyethylene, polyoxypropylene, polyoxybutylene, and polytetramethylene ether diols and triols. The polyether polyols may generally have molecular weights of from 400 to 10 000, for example from 1000 to 7000, and be prepared by polymerizing alkylene oxides in the presence of an active hydrogen-containing initiator compound, as described in US Patent Nos. 4,269,9945, 4,218,543 and 4,374,210 for instance. The alkylene oxide monomers are typically selected from the group consisting of: ethylene oxide; propylene oxide; butylene oxides; styrene oxide; epichlorohydrin; epibromohydrin; and, mixtures thereof. The active hydrogen initiators are in turn typically selected from the group consisting of: water; ethylene glycol; propylene glycol; butanediol; hexanediol; glycerin; trimethylol propane; pentaerythritol; hexanetriol; sorbitol; sucrose; hydroquinone; resorcinol; catechol; bisphenols; novolac resins; phosphoric acid; amines; and mixtures thereof. Good examples of polyether polyols which are useful preparing the polyurethane prepolymer of the present invention are the ethylene oxide-capped polyols prepared by reacting glycerine with propylene oxide, followed by reacting the product with ethylene oxide.

As is known in the art, polyester polyols may be prepared by reacting a polycarboxylic acid or anhydride thereof with a polyhydric alcohol. Examples of suitable polycarboxylic acids include succinic acid, adipic acid, suberic acid, azelaic acid, sebacic acid, phthalic acid, isophthalic acid, maleic acid, trimellitic acid, phthalic acid anhydride, tetrahydrophthalic acid anhydride, hexahydrophthalic acid anhydride, tetrachlorophthalic acid anhydride, endomethylene tetrahydrophthalic acid anhydride, maleic acid anhydride, glutaric acid anhydride, fumaric acid, and mixtures thereof. Examples of polyhydric alcohols which are useful in preparing polyester polyols include ethylene glycols, propane diols, butane diols, 1,6-hexanediol, 1,8-octanediol, neopentylglycol, glycerol, trimethylol propane, pentaerythritol, quinitol, mannitol, sorbitol, methyl glycoside, diethylene glycol, triethylene glycol, tetraethylene glycol, polyethylene glycols, polypropylene glycols, and mixtures thereof. As regards the present invention, useful polyester polyols will typically have molecular weights of from 1200 to 3000.

The use of amine polyols as the active hydrogen moiety is not precluded. This group includes the low molecular weight polyols, such as diethanol amine, triethanol amine and N-methyl-N,N'-diethanol amine, but also amine polyols obtained by the addition reaction of an amino compound such as ethylenediamine, 1,3-propanediamine and 1,6-hexanediamine with an alkylene oxide (e.g., propylene oxide (PO) and ethylene oxide (EO). As examples of suitable amine polyols, or specifically ethylene diamine-initiated polyols, may be mentioned those under the Synperonic™ T brand polyols and Synperonic™ T304 polyol (available from Croda International).

Polymer polyols which find utility as the active hydrogen moiety (A) include dispersions of (co)polymers of vinyl monomers in a continuous polyol phase as described in inter alia US Patent Nos. 4,390,645, 4,463,107, 4,148,840 and 4,574,137. Also useful are styrene/acrylonitrile (SAN) copolymer polyols, polyisocyanate polyaddition (PIPA) polyols (dispersions of polyurea-polyurethane particles in a polyol) and the polyurea dispersions in polyols (PHD polyols).

In an embodiment of the present invention, the reactant polyol(s) have an average functionality of at least 1.5, preferably at least 1.8 and more preferably at least 2.0, but no greater than 4.0, preferably no greater than about 3.5 and more preferably no greater than 3.0. Independently or additionally, the equivalent weight of the reactant polyol(s) is at least 200, preferably at least 500 and more preferably at least about 1,000 but no greater than 3500, preferably no greater than 3000 and more preferably no greater than 2500.

The polyols are present in an amount sufficient to react with most of the isocyanate groups of the isocyanates but leaving enough isocyanate groups to correspond with the desired free isocyanate content of the prepolymer. In that embodiment where the polyols comprise a mixture of diols and triols, the proportion of diol to triol must be chosen to achieve the desired isocyanate functionality of the prepolymer.

Starting from components A and B as defined above, the polyurethane prepolymer may be prepared by any suitable method, such as bulk polymerization and solution polymerization. The reaction to prepare the prepolymer is carried out under anhydrous conditions, for instance under a nitrogen blanket, to prevent cross-linking of the isocyanate groups by atmospheric moisture.

In a standard prepolymer synthesis, the compounds or polymers containing isocyanate-reactive groups are first heated in the absence of catalyst to a temperature of from 45 to 55°C. The polyisocyanate is then added under mixing to ensure it is evenly dispersed in the reaction mixture. Thereafter a polyurethane catalyst may be added. After addition of the catalyst, an exotherm generally results; in this case, the temperature of the reaction mixture may have to be lowered to ensure that it is does not gel. Plasticizer may be added after the exotherm recedes to dilute the reactants and quench the reaction. The reaction should be run such that all free isocyanate-reactive moieties are reacted with isocyanate moieties.

Standard polyurethane catalysts include: the stannous salts of carboxylic acids, such as stannous octoate, stannous oleate, stannous acetate, and stannous laureate; dialkyltin dicarboxylates, such as dibutyltin dilaureate and dibutyltin diacetate; tertiary amines; alkanolamine compounds; 2,3-dimethyl-3,4,5,6-tetrahydropyrimidine; tetraalkylammonium hydroxides; alkali metal hydroxides; alkali metal alcoholates; and, tin mercaptides. Depending on the nature of the isocyanate, the amount of catalyst employed is generally in the range from 0.005 to 10% by weight of the mixture catalyzed.

The ratio of isocyanate groups to isocyanate-reactive groups used in the reaction should be such that the resulting prepolymer has no free isocyanate-reactive groups but also that a reasonable advancement is obtained. Usually, the equivalent ratio of isocyanate groups to the isocyanate-reactive groups will reside in the range from 1.2:1 to 2:1, for example 1.4:1 to 1.6:1.

As noted above the one component adhesive composition of the present invention may further comprise an activator or catalyst - in an amount up to 20% by weight or from 0.1 to 5% by weight of the adhesive composition - which is known to promoting the cure of polyurethanes in the presence of moisture. Suitable catalysts include metal salts such as tin carboxylates, organo silicon titanates, alkyl titanates, bismuth carboxylates, and dimorpholinodiethyl ether or alkyl-substituted dimorpholinodiethyl ethers. Preferred catalsyts include bismuth octoate, dimorpholinodiethyl ether and (di-(2-(3,5-dimethylmorpholino)ethyl)) ether.

As is known in the art, the adhesive composition may be formulated with fillers and additives to modify the compositions physical properties, such as viscosity flow rates and the like. To prevent premature curing of the polyurethane prepolymer, fillers and additives should be thoroughly dried before admixture therewith.

Reinforcing fillers may be added to the adhesive composition, usually in an amount of from 0.1 to 40% or from 0.1 to 30% by weight of the adhesive composition, to modify its thixotropic properties and to increase the strength of the resultant adhesive. Such fillers are well known to those skilled in the art and include carbon black, titanium dioxide, calcium carbonate, surface treated silicas, titanium oxide, fume silica, talc, and the like.

The further additives or adjunct materials which may be included in the present invention include: clays, such as particulate kaolin, surface treated kaolin, calcined kaolin, aluminum silicates and surface treated anhydrous aluminum silicates; plasticizers, such as alkyl phthalates, partially hydrogenated terpene, trioctyl phosphate, epoxy plasticizers, toluene-sulfamide, chloroparaffins, adipic acid esters, castor oil, toluene and alkyl naphthalenes; stabilizers, such as diethyl malonate and alkylphenol alkylates; thixotropes; ultraviolet stabilizers; particulate rubber materials; microbicides; flame-proofing agents; and, antioxidants. The suitable or desirable amounts of these additives will be well known to a person of ordinary skilled in this art but it will be unusual for any given additive class to be present in an amount greater than 10% by weight of the adhesive composition.

The adhesive composition of this invention may be formulated by blending the components together using suitable means and preferably in an inert atmosphere devoid of oxygen and moisture. Once the adhesive composition is formulated, it is packaged in a suitable container such that it is also protected from atmospheric moisture and oxygen.

### Substrate

Whilst lignocellulosic substrates with poorly defined geometry - such as chipboards, fiberboards and particleboards - may be adhered in the present invention in preparing lignocellulosic composites, the preferred lignocellulosic substrates are those which have been cut or shaped for the purposes of being fitted together in a definite and pre-determined relative geometric relationship in the final composite structure. Whole boards, finger-joints, half-edged boards, I-joists, squares, wood strips and / or wood veneers might be mentioned in this regard. Concomitantly, the preferred lignocellulosic composites are laminates containing at least two wood boards, half-edged boards, squares, wood veneers or wood strips that have been laminated together.

The primer composition of the present invention may of course be applied to any wood species that is capable of being bonded with the aid of polyisocyanate-based adhesive compositions. However, in accordance with an important embodiment of the present invention, it should be used with those wood species characterized by high levels of water soluble extractives such as larch, western red cedar, European oak and American white oak. More particularly, it finds utility as a primer for lignocellulosic substrates having high levels of extractive arabinogalactan and most particularly for lignocellulosic substrates comprising wood derived from trees of the Larix genus (larch). Combinations of larch with other wood species - which may or may not contain high levels of water soluble extractives - can optionally be used in preparing a given lignocellulosic composite article, but it is generally preferred to bond larch species alone.

In an embodiment, the air-dry density of the wood to be bonded is higher than 0.4 g/cm³ and preferably from 0.40 g/cm³ to 0.75 g/cm³.

Woods which have been aged for a long period, which have been dried at high temperatures or which have been over-dried can have reduced hygroscopicity and can exhibit reduced wettability: the substrate surface may be inactivated by these treatments, which can also bring wood extractives to the surface which might detrimentally affect later substrate adhesion. It is therefore preferred for the lignocellulosic substrates to have been subjected to low temperature drying techniques, such as drying at below 150°C or freeze-drying. Alternatively or additionally, the lignocellulosic substrate may be pre-treated prior to the application of the primer composition thereto to remove any inactivated surface layers and / or remove extractives. The effectiveness of a given pre-treatment in improving the wettability of the substrate surface is dependent on the wood species but may include: brushing and / or planing the surface; treatment of the surface with polar and non-polar solvents; and, chemical treatment with sodium hydroxide, calcium hydroxide, nitric acid, and hydrogen peroxide.

### Methods

The primer composition may be applied by conventional application methods such as flooding, dipping, brushing, roll coating, doctor-blade application, printing methods, air-atomized spray, air-assisted spray, airless spray, high volume low pressure spray, air-assisted airless spray and high-speed rotation bell.

The viscosity of the primer composition will generally be from 0.005 to 1 Pa.s (50 cps to 1000 cps), as measured using a Brookfield viscometer at 25°C but, as would be recognized by a skilled practitioner, the viscosities which are appropriate for the different application methods can vary considerably. In any event, the primer composition should generally be applied to the surface(s) to be bonded in an amount of from 5 to 50 g/m², preferably from 10 to 30 g/m², for example from 20 to 30 g/m².

The primer composition should be allowed to penetrate the surface before the application of the adhesive thereto. The appropriate penetration time will depend on the amount of primer composition applied and the density, moisture content and morphology of the lignocellulosic material. Generally a penetration time of up to 20 minutes - for example of from 0 to 15, or from 1 to 10 minutes - should be allowed under standard conditions (20°C, 65% Relative Humidity). However, it is noteworthy that good adhesion results have been obtained upon adhesive application after 4 hours and even up to 24 hours after the application of the primer.

The adhesive composition according to the present invention can similarly be applied by any conventional methods known in the art. For example, the adhesive composition can be applied to substrates by machine roll coating, manual roll coating or manual brush coating. In any event, the adhesive composition should generally be applied to the surface(s) to be bonded in an amount of from 50 to 500 g/m², preferably from 75 to 300 g/m², and more preferably from 100 to 250 g/m².

After the adhesive composition and primer composition have been applied to the substrates to be bonded, the surfaces of these substrates are placed into adhesive contact, preferably under conditions that maximize the overlap of the polyisocyanate adhesive with the areas that have been treated with the primer composition. The formation of the adhesive bond may be facilitated by applying pressure to substrates, for instance a clamping pressure, to bring them into more intimate contact. Heat may be applied independently from or together with pressure to accelerate the curing of the polyurethane adhesive. For the same purpose, it is also envisaged that moisture may be added to one or more the surfaces to be bonded.

The achievement of an optimal adhesive bond will depend inter alia on the formulation of the polyurethane adhesive, the nature of the substrates to be bonded, the type of composite being produced, and the level and distribution of both the adhesive and the primer compositions. A person of ordinary skill in the art may select the appropriate curing conditions - the proper combination of heat, moisture and pressure - to optimize the adhesive bond.

As is known in the art, the substrates may be heated in an oven or heating press, by irradiation, or via streams of hot air or steam; combinations of these techniques may also be used. It is however preferred that the adhesive bond is formed at ambient temperature without external heating, that is by "cold curing".

The following examples are illustrative of the present invention, and are not intended to limit the scope of the invention in any way.

### Examples

The following materials are used in the Examples:
Tetraglyme™ is a polytetraethylene glycol dimethyl ether available in pure form from Clariant Produkte (Deutschland) GmbH.
Triglyme™ is a triethylene glycol dimethyl ether (M_{w} 178) available in pure form from Clariant Produkte (Deutschland) GmbH.
Tween® 20 is an ethoxylated (20) sorbitan ester based on a natural fatty acid (lauric acid), having an average hydroxyl value of 100 mg KOH/g and a stated HLB (hydrophilic-lipophilic balance) value of 16.7, available from Croda International.
BYK® 348 is polyether modified siloxane surfactant available from BYK Chemie GmbH.
Primer A consists of: 100% by weight Tetraglyme™ (anhydrous, <0.2 wt.% water).
Primer B consists of: 50% by weight of water; and, 50% by weight of Tetraglyme™.
Primer B' consists of: 49.9% by weight of water; 0.1% by weight of BYK® 348; and, 50% by weight of Tetraglyme™.
Primer C consists of: 49.9% by weight of water; 0.1% by weight of BYK® 348; and, 50% by weight of Triglyme™.
Primer D consists of: 49.9% by weight of water; 0.1% by weight of BYK® 348; and, 50% by weight of poly(ethylene glycol) dimethyl ether (M_{w} 200, CAS No. 24991-55-7) available from Clariant Produkte (Deutschland) GmbH.
Primer E consists of: 84.9% by weight of water; 0.1% by weight of BYK® 348; and, 15% by weight of poly(ethylene glycol) monomethyl ether (M_{w} 750, CAS No. 9004-74-4) available from Clariant Produkte (Deutschland) GmbH.
Primer F consists of: 84.9 % by weight of water; 0.1% by weight of BYK® 348; and, 15 % by weight of poly(ethylene glycol) dimethyl ether (M_{w} 500, CAS No. 24991-55-7) available from Clariant Produkte (Deutschland) GmbH.
Primer G consists of: 84.9 % by weight of water; 0.1% by weight of BYK® 348; and, 15 % by weight of poly(ethylene glycol) dimethyl ether (M_{w} 1000, CAS No. 24991-55-7) available from Clariant Produkte (Deutschland) GmbH.
Primer H (Comparative): 80 % by weight of water; and, 20% by weight of Tween® 20.

Adhesive P1 comprises a methylene diisocyanate (MDI) based prepolymer, said adhesive composition being characterized by: 15% by weight NCO content; a Brookfield viscosity of 25,000 MPa.s as measured at 20°C with a Spindle 6 after 1 minute rotation; an average isocyanate functionality of 2.4 and an open assembly time of 30 minutes.

### Example 1

Three pairs of 3-ply larch planks (specific gravity 0.51-0.63) cut tangentially to the wood rings were provided having the dimensions 37 x 110 x 330 mm (thickness x width x length) and meeting the requirements set by Canadian Standard CSA 112.9 for structural use. These samples were conventionally planed in the laboratory.

Primer A and Primer B were independently applied at a 10 g/m² spread to the respective gluing faces of two pairs of mating surfaces. No primer was applied to the gluing faces of the third pair of mating surfaces. After a period of 24 hours, Adhesive P1 was then applied in an amount of 160 g/m² to one mating surface of each pair to be mated (i.e. applied one-sided). The mating surfaces were brought together and the thus assembled parts were pressed at 0.8 MPa with a hydraulic press for 3 hours at room temperature.

The mated samples were stored for 7 days at 20°C and 65% relative humidity to ensure full adhesive cure. Wood samples for each variable were then cut into 75mm pieces and subjected to a delamination resistance (%) test based on the EN 391 Cycle B norm. Four pieces were tested for each variable and the results averaged. These test results are given in Table 1 below.

**Table 1**

| | Delamination (%) based on EN 391 Procedure B | | | | |
|---|---|---|---|---|---|
| Adhesive System | Sample 1 | Sample 2 | Sample 3 | Sample 4 | Average |
| P1 | 40 | 51 | 60 | 50 | 50 |
| P1 + Primer A | 13 | 4 | 5 | 7 | 8 |
| P1 + Primer B | 11 | 0 | 7 | 18 | 9 |

The results clearly indicate the benefits of employing a primer composition in accordance with the present invention.

### Example 2

Three pairs of 3-ply larch planks (specific gravity 0.60-0.70) cut tangentially to the wood rings were provided having the dimensions 37 x 110 x 330 mm (thickness x width x length) and meeting the requirements set by Canadian Standard CSA 112.9 for structural use. These samples were conventionally planed in the laboratory and glued within 3 hours.

Primer B' and Primer H were independently applied at a 20 g/m² spread to the respective gluing faces of two pairs of mating surfaces. No primer was applied to the gluing faces of the third pair of mating surfaces. After allowing primer penetration times of 10 minutes, Adhesive P1 was then applied in an amount of 160 g/m² to one mating surface of each pair to be mated (i.e. applied one-sided). The mating surfaces were brought together and the thus assembled parts were pressed at 0.8 MPa with a hydraulic press for 3 hours at room temperature.

The mated samples were stored for 7 days at 20°C and 65% relative humidity to ensure full adhesive cure. Wood samples for each variable were then cut into 75mm pieces and subjected to a delamination resistance (%) test based on EN 391 Cycle B norm. Five pieces were tested for each variable and the results averaged. These test results are given in Table 2 below.

**Table 2**

| | Delamination (%) based on EN 391 Procedure B | | | | | |
|---|---|---|---|---|---|---|
| Adhesive System | Sample 1 | Sample 2 | Sample 3 | Sample 4 | Sample 5 | Average |
| P1 | 51 | 43 | 45 | 50 | 52 | 48 |
| P1 + Primer B' | 6 | 2 | 0 | 0 | 2 | 2 |
| P1 + Primer H | 35 | 9 | 4 | 5 | 6 | 12 |

Tables 2 clearly indicates the benefits of using primer B' on the delamination resistance of 1 component PUR on larch. It also shows that penetration time can be shortened to 10 minutes without loss of efficacy: this can be important for the practical or industrial application of the primer.

### Example 3

Example 3 demonstrates the effect on delamination resistance of using primers containing low molecular weight glymes.

Four pairs of 4-ply larch planks (specific gravity 0.55-0.64) cut tangentially to the wood rings were provided having the dimensions 37 x 110 x 330 mm (thickness x width x length) and meeting the requirements set by Canadian Standard CSA 112.9 for structural use. These samples were conventionally planed in the laboratory and glued within 3 hours.

Primer B', Primer C and Primer D were independently applied at a 20 g/m² spread to the respective gluing faces of three pairs of mating surfaces. No primer was applied to the gluing faces of the fourth pair of mating surfaces. After allowing primer penetration times of 10 minutes, Adhesive P1 was then applied one sided in an amount of 160 g/m². The mating surfaces were brought together and the thus assembled parts were pressed at 0.8 MPa with a hydraulic press for 3 hours at room temperature.

The mated samples were stored for 7 days at 20°C and 65% relative humidity to ensure full adhesive cure. Wood samples for each variable were then cut into 75mm pieces and subjected to a delamination resistance (%) test based on EN 391 Cycle B norm. Four pieces were tested for each variable and the results averaged. These test results are given in Table 3 below.

**Table 3**

| | Delamination (%) based on EN 391 Procedure B | | | | |
|---|---|---|---|---|---|
| Adhesive System | Sample 1 | Sample 2 | Sample 3 | Sample 4 | Average |
| P1 | 73 | 47 | 49 | 52 | 55 |
| P1 + Primer B' | 18 | 0 | 12 | 12 | 11 |
| P1 + Primer C | 13 | 9 | 5 | 6 | 8 |
| P1 + Primer D | 14 | 0 | 0 | 5 | 5 |

### Example 4

Example 4 demonstrates the effect on delamination resistance of using primers containing glymes having molecular weights (Mw) in the range from 500 to 1000. The reduced concentration of these glymes - as compared to the other exemplified primers which use the low molecular weight tetraglyme, for instance - might be noted.

Four pairs of 6-ply larch planks (specific gravity 0.44-0.55) cut tangentially to the wood rings were provided having the dimensions 35 x 160 x 330 mm (thickness x width x length). These samples were conventionally planed in the laboratory and glued within 3 hours.

Primer E, Primer F and Primer G were independently applied at a 20 g/m² spread to the respective gluing faces of three pairs of mating surfaces. No primer was applied to the gluing faces of the fourth pair of mating surfaces. After allowing primer penetration times of 10 minutes, Adhesive P1 was then applied one sided in an amount of 160 g/m². The mating surfaces were brought together and the thus assembled parts were pressed at 0.8 MPa with a hydraulic press for 3 hours at room temperature.

The mated samples were stored for 7 days at 20°C and 65% relative humidity to ensure full adhesive cure. Wood samples for each variable were then cut into 75mm pieces and subjected to a delamination resistance (%) test based on EN 391 Cycle B norm. Four pieces were tested for each variable and the results averaged. These averaged test results are given in Table 4 below.

**Table 4**

| | Delamination (%) based on EN 391 Procedure B | | | | |
|---|---|---|---|---|---|
| Adhesive System | Sample 1 | Sample 2 | Sample 3 | Sample 4 | Average |
| P1 | 32 | 43 | 37 | - | 38 |
| P1 + Primer E | 1 | 11 | 1 | 2 | 4 |
| P1 + Primer F | 2 | 0 | 1 | 2 | 1 |
| P1 + Primer G | 0 | 0 | 3 | 0 | 1 |

## Claims

1. An adhesive system for preparing lignocellulosic composites comprising:
a) a primer composition; and,
b) a polyurethane adhesive composition,
wherein said primer composition comprises:
i) 1 to 100% by weight of the composition of at least one compound having a hydroxyl number of less than or equal to 30 mg KOH/g and being selected from the group consisting of polyalkylene glycols, polyalkylene glycol mono-ethers and polyalkylene glycol di-ethers;
ii) 0 to 99% by weight of the composition of solvent; and,
iii) 0 to 5% by weight of the composition of surfactant selected from the group consisting of water soluble surfactants, water emulsifiable surfactants and mixtures thereof.

2. The adhesive system according to claim 1, wherein said primer composition comprises:
5 to 60%, by weight of the composition, of at least one compound having a hydroxyl number of less than or equal to 30 mg KOH/g and being selected from the group consisting of polyalkylene glycols, polyalkylene glycol mono-ethers and polyalkylene glycol di-ethers;
up to 95% by weight of the composition of solvent; and,
0 to 0.1% by weight of the composition of said surfactant.

3. The adhesive system according to claim 1 or claim 2, wherein said primer composition comprises a polyalkylene glycol having a weight average molecular weight (Mw) of from 5,000 to 20,000 daltons and being of the formula (1):
(I) HO-[CHR¹-(CR²R³)ₙO]ₘH
wherein: n is an integer of from 1 to 5, preferably 1 or 2; m is a positive integer; and, R¹, R² and R³ are independently selected from hydrogen, alkyl, aryl, aralkyl, alkylaryl and mixtures thereof.

4. The adhesive system according to claim 3, wherein R¹, R² and R³ of said polyalkylene glycol are independently selected from the group consisting of hydrogen and C₁-C₁₀ alkyl or C₁-C₅ alkyl.

5. The adhesive system according to claim 3, wherein said polyalkylene glycol has a molecular weight of from 5,000 to 15,000 daltons and is selected from the group consisting of polyethylene glycols, polypropylene glycols and polyethylene-polypropylene glycols.

6. The adhesive system according to claim 1 or claim 2, wherein said primer composition comprises a glycol ether having a weight average molecular weight (Mw) of from 90 to 20,000 daltons and being of the formula (II):
(II) R⁴O-[CHR⁵-(CHR⁶)ₓO]_{y}-R⁷
wherein: x is an integer from 1 to 5, preferably 1 or 2; y is a positive integer; R⁴, R⁵, R⁶ and R⁷ are independently selected from hydrogen, alkyl, aryl, aralkyl, alkylaryl and mixtures thereof; and, R⁴ and R⁷ are not both hydrogen.

7. The adhesive system according to claim 6, wherein R⁴, R⁵, R⁶ and R⁷ are independently selected from the group consisting of hydrogen and C₁-C₅ alkyl, with the proviso that R⁴ and R⁷ may not both be hydrogen.

8. The adhesive system according to claim 7, wherein R⁵ and R⁶ are hydrogen.

9. The adhesive system according to claim 7 or claim 8, wherein at least one of R⁴ and R⁷ is methyl.

10. The adhesive system according to any one of claims 6 to 9, wherein y may be an integer from 1 to 60, preferably from 2 to 30 and more preferably from 5 to 30.

11. The adhesive system according to any one of claims 1 to 10, wherein the solvent of said primer composition comprises at least 80 wt.%, by weight of solvent, of water.

12. The adhesive system according to claim 1, wherein said primer composition comprises:
5 to 100%, by weight of the composition of a glycol ether having a molecular weight of from 90 to 20,000 daltons and being of the formula (II):
(II) R⁴O-[CHR⁵-(CHR⁶)ₓO]_{y}-R⁷
wherein x is an integer of 1 or 2, y is a positive integer of from 2 to 30, and R⁴, R⁵, R⁶ and R⁷ are independently selected from hydrogen and C₁-C₅ alkyl with the proviso that R⁴ and R⁷ are not both hydrogen;
0 to 95% by weight of the composition of solvent, of which solvent at least 80 wt.%, by weight of solvent, is water; and,
0 to 0.1% by weight of the composition of surfactant selected from the group consisting of siloxane based surfactants, alkyl polyglucosides including alkylpolysaccharides, alkoxylated fatty acids, alkoxylated alcohols, alkylsufosuccinates, acetylenic diols and mixtures thereof.

13. The adhesive system according to any one of claims 1 to 12, wherein said polyurethane adhesive composition is a moisture-curable, one-component polyurethane adhesive composition.

14. The adhesive system according to claim 13, wherein the one-component polyurethane adhesive composition comprises:
a prepolymer having free NCO groups, said prepolymer being obtainable from at least one component A comprising a compound reactive toward isocyanates and at least one component B comprising an isocyanate;
from 0 to 40% by weight, preferably from 0.1 to 30% by weight, of filler;
from 0 to 20% by weight of customary additives and assistants; and,
from 0 to 20% by weight of an activator.

15. The adhesive system according to claim 14, wherein said prepolymer having free NCO groups is **characterized by**:
i) an NCO content of from 5 to 30%, preferably from 10 to 25% by weight, based on the prepolymer;
ii) a functionality of from 2.2 to 3, preferably from 2.4 to 2.9; and,
iii) a viscosity at 20°C of from 300 to 35,000 mPa.s, preferably from 1000 to 10,000 mPa.s.

16. A process for preparing a lignocellulosic bonded article comprising the steps of:
(a) providing at least two lignocellulosic surfaces;
(b) providing an adhesive system as defined in any one of claims 1 to 15;
(c) applying said adhesive system to at least a portion of at least one of the lignocellulosic surfaces; and
(d) contacting the at least one lignocellulosic surface with another lignocellulosic surface under conditions suitable for forming an adhesive bond there-between.

17. The process according to claim 16, wherein said step c) of applying said adhesive system comprises:
applying the primer composition to at least a portion of at least one of the lignocellulosic surfaces; and,
after a period of from 0 to 15 minutes, preferably from 1 to 10 minutes, applying said polyurethane adhesive composition to said portion(s) of the lignocellulosic surface(s).

18. The process according to claim 16 or claim 17, wherein at least one of the lignocellulosic surfaces comprises larch.

19. An adhesive bonded lignocellulosic article obtained by the process defined in any one of claims 16 to 18.

## Patentansprüche

1. Klebstoffsystem zum Herstellen von Lignozelluloseverbundwerkstoffen, das umfasst:
a) eine Primerzusammensetzung; und
b) eine Polyurethanklebstoffzusammensetzung,
wobei die Primerzusammensetzung umfasst:
i) 1 bis 100 Gew.-% der Zusammensetzung von mindestens einer Verbindung, die eine Hydroxylzahl von höchstens 30 mg KOH/g aufweist und aus der Gruppe ausgewählt ist, die aus Polyalkylenglykolen, Polyalkylenglykolmonoethern und Polyalkylenglykoldiethern besteht;
ii) 0 bis 99 Gew.-% der Zusammensetzung eines Lösungsmittels; und,
iii) 0 bis 5 Gew.-% der Zusammensetzung eines Tensids, das aus der Gruppe ausgewählt ist, die aus wasserlöslichen Tensiden, wasseremulgierbaren Tensiden und Gemischen davon besteht.

2. Klebstoffsystem nach Anspruch 1, wobei die Primerzusammensetzung umfasst:
5 bis 60 Gew.-% der Zusammensetzung von mindestens einer Verbindung, die eine Hydroxylzahl von höchstens 30 mg KOH/g aufweist und aus der Gruppe ausgewählt ist, die aus Polyalkylenglykolen, Polyalkylenglykolmonoethern und Polyalkylenglykoldiethern besteht;
bis zu 95 Gew.-% der Zusammensetzung des Lösungsmittels; und
0 bis 0,1 Gew.-% der Zusammensetzung des Tensids.

3. Klebstoffsystem nach Anspruch 1 oder 2, wobei die Primerzusammensetzung ein Polyalkylenglykol umfasst, das ein gewichtsmittleres Molekulargewicht (Mw) von 5.000 bis 20.000 Dalton aufweist und der Formel (I) ist:
(I) HO-[CHR¹-(CR²R³)ₙO]ₘH
wobei: n eine ganze Zahl von 1 bis 5, vorzugsweise 1 oder 2 ist;
m eine positive ganze Zahl ist; und
R¹, R² und R³ unabhängig aus Wasserstoff, Alkyl, Aryl, Aralkyl, Alkylaryl und Gemischen davon ausgewählt sind.

4. Klebstoffsystem nach Anspruch 3, wobei R¹, R² and R³ des Polyalkylenglykols unabhängig aus der Gruppe ausgewählt sind, die aus Wasserstoff und C₁-C₁₀-Alkyl oder C₁-C₅-Alkyl besteht.

5. Klebstoffsystem nach Anspruch 3, wobei das Polyalkylenglykol ein Molekulargewicht von 5.000 bis 15.000 Dalton aufweist und aus der Gruppe ausgewählt ist, die aus Polyethylenglykolen, Polypropylenglykolen und Polyethylenpolypropylenglykolen besteht.

6. Klebstoffsystem nach Anspruch 1 oder 2, wobei die Primerzusammensetzung ein Glykolether umfasst, das ein gewichtsmittleres Molekulargewicht (Mw) von 90 bis 20.000 Dalton aufweist und der Formel (II) ist:
(II) R⁴O-[CHR⁵-(CHR⁶)ₓO]_{y}-R⁷
wobei: x eine ganze Zahl von 1 bis 5, vorzugsweise 1 oder 2 ist;
y eine positive ganze Zahl ist;
R⁴, R⁵, R⁶ und R⁷ unabhängig aus Wasserstoff, Alkyl, Aryl, Aralkyl, Alkylaryl und Gemischen davon ausgewählt sind; und,
R⁴ und R⁷ beide nicht Wasserstoff sind.

7. Klebstoffsystem nach Anspruch 6, wobei R⁴, R⁵, R⁶ und R⁷ unabhängig aus der Gruppe ausgewählt sind, die aus Wasserstoff und C₁-C₅-Alkyl besteht, mit der Einschränkung, dass R⁴ und R⁷ beide nicht Wasserstoff sind.

8. Klebstoffsystem nach Anspruch 7, wobei R⁵ und R⁶ Wasserstoff sind.

9. Klebstoffsystem nach Anspruch 7 oder 8, wobei der Rest R⁴ und/oder R⁷ Methyl ist.

10. Klebstoffsystem nach einem der Ansprüche 6 bis 9, wobei y eine ganze Zahl von 1 bis 60, vorzugsweise 2 bis 30 und stärker vorzugsweise von 5 bis 30 sein kann.

11. Klebstoffsystem nach einem der Ansprüche 1 bis 10, wobei das Lösungsmittel der Primerzusammensetzung mindestens 80 Gew.-% des Lösungsmittels Wasser umfasst.

12. Klebstoffsystem nach Anspruch 1, wobei die Primerzusammensetzung umfasst:
5 bis 100 Gew.-% der Zusammensetzung eines Glykolethers, das ein ein Molekulargewicht von 90 bis 20.000 Dalton aufweist und der Formel (II) ist:
(II) R⁴O-[CHR⁵-(CHR⁶)ₓO]_{y}-R⁷
wobei x eine ganze Zahl von 1 oder 2 ist, y eine positive ganze Zahl von 2 bis 30 ist und R⁴, R⁵, R⁶ und R⁷ unabhängig aus Wasserstoff und C₁-C₅-Alkyl ausgewählt sind, mit der Einschränkung, dass R⁴ und R⁷ beide nicht Wasserstoff sind;
0 bis 95 Gew.-% der Zusammensetzung des Lösungsmittels, wobei mindestens 80 Gew.-% des Lösungsmittels Wasser ist; und,
0 bis 0,1 Gew.-% des Zusammensetzung des Tensids, das aus der Gruppe ausgewählt ist, die aus Tensiden auf Siloxanbasis, Alkylpolyglucosiden, einschließlich Alkylpolysacchariden, alkoxylierten Fettsäuren, alkoxylierten Alkoholen, Alkylsufosuccinaten, Acetylendiolen und Gemischen davon besteht.

13. Klebstoffsystem nach einem der Ansprüche 1 bis 12, wobei die Polyurethanklebstoffzusammensetzung eine feuchtigkeitshärtbare Einkomponentenpolyurethanklebstoffzusammensetzung ist.

14. Klebstoffsystem nach Anspruch 13, wobei die Einkomponentenpolyurethanklebstoffzusammensetzung umfasst:
ein Vorpolymer mit freien NCO-Gruppen, wobei das Vorpolymer erhältlich ist aus mindestens einer Komponente A, die eine gegenüber Isocyanaten reagierende Verbindung umfasst, und mindestens einer Komponente B, die ein Isocyanat umfasst;
von 0 bis 40 Gew.-%, vorzugsweise 0,1 bis 30 Gew.-%, des Füllstoff;
von 0 bis 20 Gew.-% der üblichen Zusatz- und Hilfsstoffe; und
von 0 bis 20 Gew.-% eines Aktivators.

15. Klebstoffsystem nach Anspruch 14, wobei das Vorpolymer mit freien NCO-Gruppen **gekennzeichnet ist durch**:
i) einen NCO-Gehalt von 5 bis 30 %, vorzugsweise von 10 bis 25 Gew.-%, basierend auf dem Vorpolymer;
ii) eine Funktionalität von 2,2 bis 3, vorzugsweise von 2,4 bis 2,9; und
iii) eine Viskosität bei 20 °C von 300 bis 35.000 mPa.s, vorzugsweise von 1000 bis 10.000 mPa.s.

16. Vorgang zum Herstellen eines lignozellulosischgebundenen Erzeugnisses, das die Schritte umfasst:
(a) Bereitstellen von mindestens zwei lignozellulosischen Oberflächen;
(b) Bereitstellen eines Klebstoffsystem nach einem der Ansprüche 1 bis 15;
(c) Auftragen des Klebstoffsystem auf mindestens einen Abschnitt von mindesten einer der lignozellulosischen Oberflächen; und
(d) Inberührungbringen der mindestens einen lignozellulosischen Oberfläche mit einer anderen lignozellulosischen Oberfläche unter Bedingungen, die zum Ausbilden einer Klebstoffbindung dazwischen geeignet sind.

17. Vorgang nach Anspruch 16, wobei der Schritt c) des Auftragen des Klebstoffsystems umfasst:
Auftragen der Primerzusammensetzung auf mindestens einen Abschnitt von mindestens einer der lignozellulosischen Oberflächen; und,
nach einem Zeitraum von 0 bis 15 Minuten, vorzugsweise 1 bis 10 Minuten, Auftragen der Polyurethanklebstoffzusammensetzung auf den/die Abschnitt(e) der lignozellulosischen Oberfläche(n).

18. Vorgang nach Anspruch 16 oder 17, wobei mindestens eine der lignozellulosischen Oberflächen Lärche umfasst.

19. Klebstoffgebundenes lignozellulosische Erzeugnis, das durch den in einem der Ansprüche 16 bis 18 definierten Vorgang erhalten wird.

## Revendications

1. Système adhésif pour la préparation de composites lignocellulosiques comprenant :
a) une composition d'apprêt ; et,
b) une composition adhésive polyuréthane,
dans lequel ladite composition d'apprêt comprend :
i) 1 à 100 % en poids de la composition d'au moins un composé ayant un indice d'hydroxyle inférieur ou égal à 30 mg KOH/g et étant choisi dans le groupe constitué par les polyalkylène glycols, les mono-éthers de polyalkylène glycol et les di-éthers de polyalkylène glycol ;
ii) 0 à 99 % en poids de la composition de solvant ; et,
iii) 0 à 5 % en poids de la composition de tensioactif choisi dans le groupe constitué par les tensioactifs hydrosolubles, les tensioactifs émulsionnables dans l'eau et leurs mélanges.

2. Système adhésif selon la revendication 1, dans lequel ladite composition d'apprêt comprend :
5 à 60 %, en poids de la composition, d'au moins un composé ayant un indice d'hydroxyle inférieur ou égal à 30 mg KOH/g et étant choisi dans le groupe constitué par les polyalkylène glycols, les mono-éthers de polyalkylène glycol et les di-éthers de polyalkylène glycol ;
jusqu'à 95 % en poids de la composition de solvant ; et,
0 à 0,1 % en poids de la composition dudit tensioactif.

3. Système adhésif selon la revendication 1 ou la revendication 2, dans lequel ladite composition d'apprêt comprend un polyalkylène glycol ayant un poids moléculaire moyen en poids (Mw) de 5 000 à 20 000 daltons et ayant la formule (I) :
(I) HO-[CHR¹-(CR²R³)ₙO]ₘH
dans laquelle : n est un entier de 1 à 5, de préférence 1 ou 2 ; m est un entier positif ; et, R¹, R² et R³ sont choisis indépendamment parmi l'hydrogène, l'alkyle, l'aryle, l'aralkyle, l'alkylaryle et leurs mélanges.

4. Système adhésif selon la revendication 3, dans lequel R¹, R² et R³ dudit polyalkylène glycol sont choisis indépendamment dans le groupe constitué par l'hydrogène et l'alkyle en C₁ à C₁₀ ou l'alkyle en C₁ à C₅.

5. Système adhésif selon la revendication 3, dans lequel ledit polyalkylène glycol a un poids moléculaire de 5 000 à 15 000 daltons et est choisi dans le groupe constitué par les polyéthylène glycols, les polypropylène glycols et les polyéthylène-polypropylène glycols.

6. Système adhésif selon la revendication 1 ou la revendication 2, dans lequel ladite composition d'apprêt comprend un éther glycol ayant un poids moléculaire moyen en poids (Mw) d'environ 90 à 20 000 daltons et ayant la formule (II) :
(II) R⁴O-[CHR⁵-(CHR⁶)ₓO]_{y}-R⁷
dans laquelle : x est un entier de 1 à 5, de préférence 1 ou 2 ; y est un entier positif ; R⁴, R⁵, R⁶ et R⁷ sont choisis indépendamment parmi l'hydrogène, l'alkyle, l'aryle, l'aralkyle, l'alkylaryle et leurs mélanges ; et, R⁴ et R⁷ ne sont pas tous deux de l'hydrogène.

7. Système adhésif selon la revendication 6, dans lequel R⁴, R⁵, R⁶ et R⁷ sont choisis indépendamment dans le groupe constitué par l'hydrogène et l'alkyle en C₁ à C₅, à condition que R⁴ et R⁷ ne puissent pas tous deux être de l'hydrogène.

8. Système adhésif selon la revendication 7, dans lequel R⁵ et R⁶ sont de l'hydrogène.

9. Système adhésif selon la revendication 7 ou la revendication 8, dans lequel au moins l'un de R⁴ et R⁷ est du méthyle.

10. Système adhésif selon l'une quelconque des revendications 6 à 9, dans lequel y peut être un entier de 1 à 60, de préférence de 2 à 30 et plus préférablement de 5 à 30.

11. Système adhésif selon l'une quelconque des revendications 1 à 10, dans lequel le solvant de ladite composition d'apprêt comprend au moins 80 % en poids, en poids de solvant, d'eau.

12. Système adhésif selon la revendication 1, dans lequel ladite composition d'apprêt comprend :
5 à 100 % en poids de la composition d'un éther glycol ayant un poids moléculaire de 90 à 20 000 daltons et étant de la formule (II) :
(II) R⁴O-[CHR⁵-(CHR⁶)ₓO]_{y}-R⁷
dans laquelle x est un entier de 1 ou 2, y est un entier positif de 2 à 30, et R⁴, R⁵, R⁶ et R⁷ sont choisis indépendamment parmi l'hydrogène et l'alkyle en C₁ à C₅ à condition que R⁴ et R⁷ ne soient pas tous deux de l'hydrogène ;
0 à 95 % en poids de la composition de solvant, dont au moins 80 % en poids, en poids de solvant, est de l'eau ; et,
0 à 0,1 % en poids de la composition de tensioactif choisi dans le groupe constitué par les tensioactifs à base de siloxane, les alkyl polyglucosides comportant les alkylpolysaccharides, les acides gras alcoxylés, les alcools alcoxylés, les alkylsufosuccinates, les diols acétyléniques et leurs mélanges.

13. Système adhésif selon l'une quelconque des revendications 1 à 12, dans lequel ladite composition adhésive polyuréthane est une composition adhésive polyuréthane monocomposant durcissable à l'humidité.

14. Système adhésif selon la revendication 13, dans lequel la composition adhésive polyuréthane monocomposant comprend :
un prépolymère ayant des groupes NCO libres, ledit prépolymère pouvant être obtenu à partir d'au moins un composant A comprenant un composé réactif vis à vis des isocyanates et au moins un composant B comprenant un isocyanate ;
de 0 à 40 % en poids, de préférence de 0,1 à 30 % en poids, de charge ;
de 0 à 20 % en poids d'additifs et d'adjuvants habituels ; et,
de 0 à 20 % en poids d'un activateur.

15. Système adhésif selon la revendication 14, dans lequel ledit prépolymère ayant des groupes NCO libres est **caractérisé par** :
i) une teneur en NCO de 5 à 30 %, de préférence de 10 à 25 % en poids, par rapport au prépolymère ;
ii) une fonctionnalité de 2,2 à 3, de préférence de 2,4 à 2,9 ; et,
iii) une viscosité à 20 °C de 300 à 35 000 mPa.s, de préférence de 1 000 à 10 000 mPa.s.

16. Procédé de préparation d'un article lignocellulosique lié comprenant les étapes :
(a) de fourniture d'au moins deux surfaces lignocellulosiques ;
(b) de fourniture d'un système adhésif tel que défini selon l'une quelconque des revendications 1 à 15 ;
(c) d'application dudit système adhésif sur au moins une partie d'au moins une des surfaces lignocellulosiques ; et
(d) de mise en contact de l'au moins une surface lignocellulosique avec une autre surface lignocellulosique dans des conditions appropriées pour former une liaison adhésive entre elles.

17. Procédé selon la revendication 16, dans lequel ladite étape c) d'application dudit système adhésif comprend :
l'application de la composition d'apprêt sur au moins une partie d'au moins une des surfaces lignocellulosiques ; et,
après une période de 0 à 15 minutes, de préférence de 1 à 10 minutes, l'application de ladite composition adhésive polyuréthane sur ladite ou lesdites parties de la ou des surfaces lignocellulosiques.

18. Procédé selon la revendication 16 ou la revendication 17, dans lequel au moins une des surfaces lignocellulosiques comprend du mélèze.

19. Article lignocellulosique lié par adhésif obtenu par le procédé défini selon l'une quelconque des revendications 16 à 18.
